# EUROPÄISCHE PATENTANMELDUNG

(11) **EP 1 004 874 A1**
(43) Veröffentlichungstag der Anmeldung: **31.05.2000**
(21) Anmeldenummer: 99122633.3
(22) Anmeldetag: 13.11.1999
(51) Int. Cl.: G01N 22/04

(54) **Resonatorgehäuse für Mikrowellen**

(30) Priorität: 26.11.1998 DE 19854550
(71) Anmelder: Hauni Maschinenbau AG, 21033 Hamburg (DE)
(72) Erfinder: Schröder, Dierk, Dr., 22399 Hamburg (DE); Hohenstein, Norbert, 21509 Glinde (DE); Schreiber, Peter, 21465 Reinbek (DE); Noack, Andreas, 21423 Drage (DE); Tobias, Jörg, 21423 Drage (DE)

(57) **Zusammenfassung**

Beschrieben wird ein von einem Strang der tabakverarbeitenden Industrie durchsetztes Resonatorgehäuse, dem Mikrowellen zwecks Erfassung der Masse und/oder Feuchte des Strangmaterials zugeführt sind.
Der mit dem nachfolgend beschriebenen Resonatorgehäuse verfolgte Zweck besteht darin, die Meßgenauigkeit und gegebenenfalls Meßempfindlichkeit bei der Erfassung der Masse und/oder Feuchte von Füllmaterialien von Strängen der tabakverarbeitenden Industrie zu verbessern.
Dies wird dadurch erreicht, daß das Gehäuse zumindest teilweise aus Material mit einem niedrigen Temperaturausdehnungskoeffizienten besteht.
Der Verbesserung der Meßgenauigkeit dient es auch, wenn die Temperatur des Resonatorgehäuses auf einen konstanten Wert geregelt wird. Schließlich wirkt es sich vorteilhaft aus, wenn die Wände des Innenraumes des Gehäuses zumindest teilweise mit einem korrosionsbeständigen Metall beschichtet sind oder aus derartigem Metall bestehen.
Mit dem beschriebenen Resonatorgehäuse lassen sich die Meßgenauigkeiten bei der Masse- und/oder Feuchteerfassung der obengenannten Materialien erheblich verbessern.

## Beschreibung

Die Erfindung betrifft ein von einem Strang der tabakverarbeitenden Industrie durchsetztes Resonatorgehäuse aus metallischem Material, dem Mikrowellen zwecks Erfassung der Masse und/oder der Feuchte des Strangmaterials zugeführt sind.
Unter einem Strang der tabakverarbeitenden Industrie wird ein umhüllter oder unumhüllter Strang aus rauchfähigem Material wie Schnittabak, Zigarillotabak, Zigarrentabak oder einem anderen rauchfähigem Material verstanden; unter diesem Ausdruck kann auch ein Strang aus einem Filtermaterial wie Celluloseacetat oder Papier verstanden werden.
Es ist, z. B. durch die EP 0791 823 A2, bekannt, zum Erfassen der Masse und/oder der Feuchte eines Tabakstranges, insbesondere eines aus mit Zigarettenpapier umhüllten Schnittabak bestehenden Zigarettenstranges, den Strang durch eine Meßkammer aus Metall (im folgenden 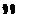 Resonatorgehäuse" genannt) zu führen, in der er von Mikrowellen beaufschlagt wird. Aus Veränderungen charakteristischer Werte der zugeführten Mikrowellen bei durch einen Strang durchsetztem Resonatorgehäuse und bei z. B. leerem Resonatorgehäuse kann durch besondere Auswertschaltungen auf die Masse und/oder Feuchte je Längeneinheit des Stranges geschlossen werden.
Die der Erfindung zugrundeliegende Aufgabe besteht in einer Verbesserung von Resonatorgehäusen gemäß dem Stand der Technik in verschiedener Hinsicht zwecks Erhöhung der Meßgenauigkeit und/oder Meßempfindlichkeit.
Die Lösung gemäß der Erfindung besteht darin, daß das Resonatorgehäuse zumindest teilweise aus Material mit einem niedrigen Temperaturausdehnungskoeffizienten besteht.
Eine besonders vorteilhafte Realisierung der Erfindung besteht darin, als Material mit niedrigem Temperaturausdehnungskoeffizienten eine Legierung vorzusehen, die aus ca. 64 % Eisen und ca. 36 % Nickel besteht. Die Legierungsbestandteile können aber auch um die genannten Werte herum variieren, solange nur der Temperaturausdehungskoeffizient niedrig genug ist, daß die mechanischen Verformungen bei Temperaturschwankungen nicht so hoch werden, daß sie das Meßergebnis unzulässig verfälschen. Unter dieser Bedingung können auch weitere Legierungsbestandteile vorgesehen sein.
Eine weitere vorteilhafte Ausgestaltung der Erfindung, der selbständiger erfinderischer Rang zukommt, besteht darin, daß das Resonatorgehäuse eine Temperaturregelanordnung aufweist, die seine Arbeitstemperatur zumindest annähernd konstant hält. Die Temperaturregelanordnung weist bevorzugt einen Fühler für die Temperatur des Resonatorgehäuses auf, der einen Transistor derart steuert, daß dessen Verlustwärme die Temperatur des Gehäuses zumindest annähernd konstant hält.
Der Innenraum des Resonatorgehäuses hat in Weiterbildung der Erfindung die Form eines symmetrischen Hohlkörpers, vorzugsweise eines Hohlzylinders, der durch ein betriebsmäßig entfernbares Verschlußelement verschließbar ist. Die Form des Innenraums kann von der exakten Form eines Hohlzylinders abweichen. Vorteilhaft ist aber auch dann eine zumindest annähernd symmetrische Form, z. B. eine Polygonform.
In weiterer vorteilhafter Ausgestaltung der Erfindung, der ebenfalls selbständiger erfinderischer Rang zukommt, sind die Wände des Innenraumes des Resonatorgehäuses zumindest teilweise mit einem korrosionsbeständigen Material beschichtet oder sie bestehen aus derartigem Material. Bevorzugt wird ein Metall verwendet, das elektrisch gut leitend ist. Beide Forderungen werden durch Gold erfüllt, das entweder zumindest weitgehend rein oder in einer geeigneten Legierung verwendet werden kann. Reingold eignet sich zum Beschichten des Innenraumes, weil schon sehr dünne Schichten für den erstrebten Zweck der Korrosionsbeständigkeit und der elektrischen Leitfähigkeit ausreichen. Vorteilhaft werden gemäß der Erfindung auch die Außenwände des Resonatorgehäuses mit korrosionsbeständigem Material versehen, z. B. vergoldet, um Korrosion hintanzuhalten.
In weiterer vorteilhafter Ausgestaltung der Erfindung, der ebenfalls selbständiger erfinderischer Rang zukommt, ist ein geschlossenes den Strang umgebendes Schutzrohr vorgesehen. Das Schutzrohr besteht vorteilhaft zumindest teilweise aus einem Kunststoff, insbesondere der Polyaryletherketon-Gruppe (PEAK-Gruppe), insbesondere aus Polyetheretherketon (PEEK). Das Schutzrohr gemäß der Erfindung kann im Einlaufbereich des Stranges erweitert sein.
Das Resonatorgehäuse kann sich gemäß der Erfindung außerhalb des Innenraumes (Resonatorraum) nach außen in Richtung des Stranges zwecks Verhinderung des Austritts von Mikrowellen fortsetzen. Das Resonatorgehäuse kann sich auch innerhalb des Innenraumes (Resonatorraum) nach innen in Richtung des Stranges fortsetzen.
Das Resonatorgehäuse gemäß der Erfindung eignet sich besonders bei einer Meßanordnung mit einer Zufuhr der Mikrowellen mit mindestens zwei unterschiedlichen Frequenzen von einem Generator zu dem Resonatorgehäuse und durch eine Resonanzfrequenz-Verschiebungen durch Vergleich der von dem Strang beeinflußten Resonanzkurve gegenüber der von dem Strang unbeeinflußten Resonanzkurve sowie die Dämpfung durch Vergleich der Amplituden der von dem Strang beeinflußten und unbeeinflußten Resonanzkurven erfassende Schaltungsanordnung.
Eine weitere vorteilhafte Weiterbildung der Erfindung besteht darin, daß dem Resonator Mikrowellen von zwei Frequenzen zugeführt werden, die beide einer abfallenden Flanke der Resonanzkurve zugeordnet sind.

Die Erfindung weist zahlreiche Vorteile auf:
Das Resonatorgehäuse aus Material mit extrem geringem Temperaturausdehnungskoeffizienten verändert seine Form bei wechselnden Temperaturen sehr wenig. Hierzu kann auch die Temperaturregelung beitragen. Die Folge ist eine sehr gute Konstanz der Resonatoreigenschaften, was der Genauigkeit und Konstanz der Meßwerterfassung zugute kommt.

Die Verwendung von korrosionsbeständigem Material wie Gold für die Beschichtung des Innenraums des Resonatorgehäuses verhindert Korrosion und dadurch ausgelöste Änderungen der Resonatoreigenschaften. Infolge der guten elektrischen Leitfähigkeit dieses Beschichtungsmaterials werden negative Einflüsse durch den sogenannten Skin-Effekt weitgehend hintangehalten.
Das Resonatorgehäuse ist für die Mikrowellenzufuhr und die Umwandlung der Mikrowellensignale in Meßsignale gemäß der Erfindung besonders geeignet.

Die Erfindung wird anhand eines Ausführungsbeispiels näher erläutert.

Ein teilweise aufgebrochener in Richtung des Pfeils 5 bewegter Zigarettenstrang 1, bestehend aus einem Füller 2 aus Schnittabak und einer Umhüllung 3 aus Zigarettenpapier, durchsetzt ein Resonatorgehäuse 4, dem Mikrowellen zwecks Erfassung der Masse und/oder Feuchte des Füllers zugeführt werden. Das Resonatorgehäuse 4 weist einen Hohlkörper in Form eines Hohlzylinders 6 auf, dessen Innenraum 7 symmetrisch zu dem Zigarettenstrang 1 angeordnet ist. An ihm ist ein Deckel 8 zum Verschließen angeschraubt. Sowohl Hohlzylinder 6 als auch Deckel 8 bestehen aus Material mit einem sehr niedrigen Temperaturausdehungskoeffizienten. Hierzu eignet sich eine Legierung, die zumindest annähernd aus 64 % Eisen und 36 % Nickel besteht. Infolge der guten Konstanz der Geometrie des Resonatorgehäuses 4 läßt sich auch eine gute Konstanz der Meßergebnisse erreichen. Hierzu trägt noch eine Regelung der Temperatur des Resonatorgehäuses bei, dessen Temperatur durch einen Temperaturfühler 9 erfaßt wird. Der Temperaturfühler steuert mindestens einen Heiztransistor 11, z. B. vom Typ BUZ 80 der Fa. Siemens, dessen Verlustwärme das Resonatorgehäuse über Umgebungstemperatur erwärmt. Die Steuerung durch den Temperaturfühler erfolgt derart, daß die Temperatur des Gehäuses 4 zumindest weitgehend konstant gehalten wird.
Der Innenraum 7 des Resonatorgehäuses 6 ist mit einer dünnen Goldschicht 12 bedampft, die eine die Meßwertkonstanz beeinträchtigende Korrosionsbildung zuverlässig verhindert und gleichzeitig, da elektrisch gut leitend, einen schädlichen Skin-Effekt verhindert. Zweckmäßig wird das Resonatorgehäuse 4 auch von außen vergoldet, um auch äußere Korrosion auszuschließen.
Zum mechanischen Abschluß des Innenraums 7 gegenüber dem Zigarettenstrang 1 und von diesem eventuell angeförderten Schmutzteilchen, also zwecks Verhinderung einer Verschmutzung des Innenraums 7, die das Meßergebnis beeinträchtigen würde, dient ein Schutzrohr 13, das vorteilhaft aus einer Substanz der Polyaryletherketon(PAEK)-Gruppe, z. B. aus Polyetheretherketon (PEEK) besteht. An einem seiner Enden 13a, an dem der Strang 1 in das Resonatorgehäuse 6 einläuft, ist das Schutzrohr 13 trichterförmig aufgeweitet.
Das Resonatorgehäuse 4 erstreckt sich außerhalb des Innenraums 7 rohrförmig (6a, 8a) auf beiden Seiten in Richtung des Strangs 1 nach außen, um den Austritt von Mikrowellen aus der Resonatorkammer zu verhindern. Es kann sich auch rohrförmig (6b, 8d) etwas nach innen erstrecken. Zur Einkopplung der von einem Mikrowellengenerator erzeugten Mikrowellen dient eine durch einen Isolierring 14 vom Metallgehäuse 6 isolierte Antenne 16. Zum Auskoppeln von Mikrowellen, die einer nicht dargestellten Auswertschaltung zugeführt werden sollen, dient eine durch eine Isolierung 17 isolierte Antenne 18. Eine geeignete Auswertschaltung ist der deutschen Patentanmeldung 197 34 978.1 zu entnehmen.

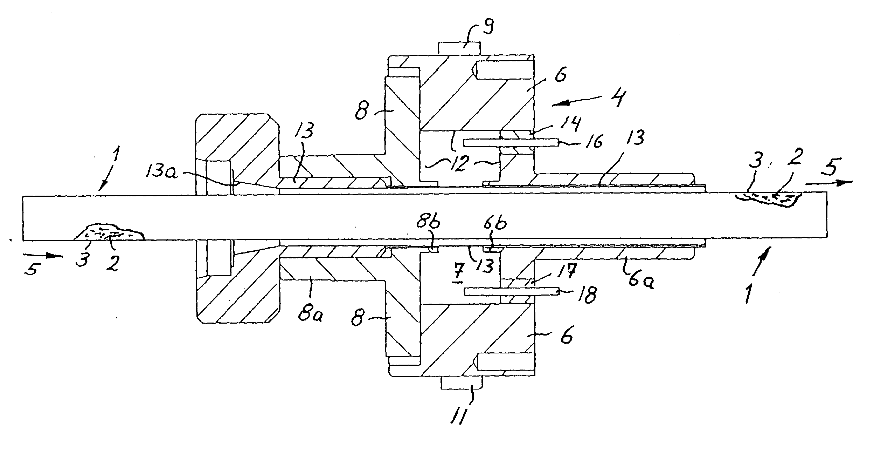

## Patentansprüche

1. Von einem Strang der tabakverarbeitenden Industrie durchsetztes Resonatorgehäuse aus metallischem Material, dem Mikrowellen zwecks Erfassung der Masse und/oder der Feuchte des Strangmaterials zugeführt sind, dadurch gekennzeichnet, daß das Gehäuse (4) zumindest teilweise aus Material mit einem niedrigen Temperaturausdehnungskoeffizienten besteht.

2. Resonatorgehäuse nach Anspruch 1, dadurch gekennzeichnet, daß das Gehäuse (4) zumindest teilweise aus einer Legierung besteht, die ca. 64 % Eisen und ca. 36 % Nickel enthält.

3. Resonatorgehäuse nach Anspruch 1 und/oder 2, dadurch gekennzeichnet, daß das Gehäuse (4) eine Temperaturregelanordnung (9, 11) aufweist, die seine Arbeitstemperatur zumindest annähernd konstant hält.

4. Resonatorgehäuse nach Anspruch 3, dadurch gekennzeichnet, daß die Temperaturregelanordnung einen Fühler (9) für die Temperatur des Gehäuses (4) aufweist, der einen Transistor (11) derart steuert, daß dessen Verlustwärme die Temperatur des Gehäuses zumindest annähernd konstant hält, vorzugsweise über Umgebungstemperatur.

5. Resonatorgehäuse nach einem oder mehreren der vorhergehenden Ansprüche, dadurch gekennzeichnet, daß der Innenraum (7) des Gehäuses (4) die Form eines symmetrischen Hohlkörpers, vorzugsweise eines Hohlzylinders (6) aufweist, der durch ein betriebsmäßig entfernbares und wieder anbringbares Verschlußelement (8) verschließbar ist.

6. Resonatorgehäuse nach einem oder mehreren der vorhergehenden Ansprüche, dadurch gekennzeichnet, daß die Wände (12 ) des Innenraumes (7) des Gehäuses (4) zumindest teilweise mit einem korrosionsbeständigen Metall (12) beschichtet sind oder aus derartigem Material bestehen.

7. Resonatorgehäuse nach Anspruch 6, dadurch gekennzeichnet, daß das zur Beschichtung verwendete Metall elektrisch gut leitend ist.

8. Resonatorgehäuse nach Anspruch 6 und/oder 7, dadurch gekennzeichnet, daß die Außenfläche des Gehäuses (4) mit einem korrosionsbeständigen Metall beschichtet ist.

9. Resonatorgehäuse nach einem oder mehreren der Ansprüche 6 bis 8, dadurch gekennzeichnet, daß das Beschichtungsmetall im wesentlichen aus Gold besteht oder zumindest Gold enthält.

10. Resonatorgehäuse nach einem oder mehreren der vorhergehenden Ansprüche, dadurch gekennzeichnet, daß ein geschlossenes den Strang (1) umgebendes Schutzrohr (13) vorgesehen ist.

11. Resonatorgehäuse nach Anspruch 10, dadurch gekennzeichnet, daß das Schutzrohr (13) zumindest teilweise aus einem Kunststoff der Polyaryletherketon(PEAK)-Gruppe, insbesondere aus Polyetheretherketon (PEEK) besteht.

12. Resonatorgehäuse nach Anspruch 10 und/oder 11, dadurch gekennzeichnet, daß das Schutzrohr (13) im Einlaufbereich (13a) des Stranges (1) erweitert ist.

13. Resonatorgehäuse nach einem oder mehreren der vorhergehenden Ansprüche, dadurch gekennzeichnet, daß das Gehäuse (4) sich außerhalb des Innenraumes (Resonatorraum 7) nach außen in Richtung des Stranges (1) zwecks Verhinderung des Austritts von Mikrowellen fortsetzt (6a, 8a).

14. Resonatorgehäuse nach einem oder mehreren der vorhergehenden Ansprüche, dadurch gekennzeichnet, daß das Gehäuse (4) sich innerhalb des Innenraumes (Resonatorraum 7) nach innen in Richtung des Stranges (1) fortsetzt (6b, 8b).

15. Resonatorgehäuse nach einem oder mehreren der vorhergehenden Ansprüche, gekennzeichnet durch eine Zufuhr von Mikrowellen mit mindestens zwei unterschiedlichen Frequenzen von einem Generator zu dem Resonatorgehäuse und durch eine Frequenz-Verschiebungen durch Vergleich der von dem Strang beeinflußten Resonanzkurve gegenüber der von dem Strang unbeeinflußten Resonanzkurve sowie die Dämpfung durch Vergleich der Amplituden der von dem Strang beeinflußten und unbeeinflußten Resonanzkurven erfassende Schaltungsanordnung.

16. Resonatorgehäuse nach Anspruch 15, dadurch gekennzeichnet, daß dem Resonator Mikrowellen von zwei Frequenzen zugeführt werden, die beide einer abfallenden Flanke der Resonanzkurve zugeordnet sind.
